(19) Europäisches Patentamt

European Patent Office

Office européen des brevets

(11) **EP 1 616 622 A2**

(12) **EUROPEAN PATENT APPLICATION**

(43) Date of publication:
**18.01.2006 Bulletin 2006/03**

(51) Int Cl.:
*B01L 3/00* (2006.01)      *B01L 9/00* (2006.01)
*B01J 19/00* (2006.01)      *G01N 21/64* (2006.01)
*G01N 33/50* (2006.01)

(21) Application number: **05007076.2**

(22) Date of filing: **31.03.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **12.07.2004 JP 2004204537**

(71) Applicant: **HITACHI SOFTWARE ENGINEERING CO., LTD.**
**Yokohama-shi, Kanagawa 230-0045 (JP)**

(72) Inventors:
• **Inaba, Toru**
**c/o Hitachi, Ltd.**
**Chiyoda-ku**
**Tokyo (JP)**

• **Sasaki, Yasuhiko**
**c/o Hitachi, Ltd.**
**Chiyoda-ku**
**Tokyo (JP)**
• **Togashi, Shigenori**
**c/o Hitachi, Ltd.**
**Chiyoda-ku**
**Tokyo (JP)**
• **Kishida, Hiroshi**
**c/o Hitachi, Ltd.**
**Chiyoda-ku**
**Tokyo (JP)**
• **Shimizu, Takashi**
**c/o Hitachi, Ltd.**
**Chiyoda-ku**
**Tokyo (JP)**

(74) Representative: **Beetz & Partner**
**Steinsdorfstrasse 10**
**80538 München (DE)**

(54) **Bead-biochip**

(57) Within an inside of a bead chip (30) forming a reactor flow pass therein, rinsing liquid flow passes are also provided in one body. For the purpose of promoting reaction upon a bead array, a turbulence generator (41) or an flow separation stop guide is provided within the reactor flow pass (2), in which the beads (1) are received. The bead chip (30) is made of a PDMS (Polydimethylsiloxane: $(C_2H_6SiO)_n$), thereby enabling the reactor flow pass (2) and the rinsing liquid flow passes (4,5,6,7) to be formed freely in the configurations thereof.

**FIG.5**

EP 1 616 622 A2

## Description

The present application claims priority from Japanese application JP 2004-204537 filed on July 12, 2004, the content of which is hereby incorporated by reference into this application.

## BACKGROUND OF THE INVENTION

The present invention relates to detection and/or diagnosis of the materials, in particular, relating to an organism, such as, peptide, protein, DNA, RNA, etc. , and in particular, it relates to a reaction/detection apparatus of using a probe therein, to be used in analyzing of the materials relating to the organism, such as, DNA and so on.

Due to the fact of completion upon decoding or decipherment about the base sequences of the human genome, a movement comes to be active, in particular, of understanding an organism under the level DNA, thereby to applying into comprehension of the phenomenon of life and also into practical uses of the examination of diseases. For such the purposes, it is important to distinguish a difference in the type of gene and/or a difference in the situation upon manifestation of gene, simultaneously, but in large numbers thereof, so as to make comparison between the respective diseases or individuals. Conventionally, as an effective method for investigating such the manifesting situation of gene, there is used a DNA probe chip, in which a large number of DNA probes are divided into a several number of kinds or sorts thereof upon a solid surface, such as, of a slide glass or the like, or a DNA chip, and further there is used a protein chip.

As a technology for manufacturing such the chips, in Science 251, pp 767-773 (1001), for example, there is described a method of applying a technology of lithography that is widely used in a photochemical reaction and a semiconductor industry, wherein origomer having designed sequences are composed or synthesized within a large number of sections divided on the slide glass, by each one (1) base thereof. Or, in Anal. Chem. 69, pp 543-551 (1997), for example, there is described a method of planning plural numbers of DNA probes into each section one by one.

On the other hand, in Japanese Patent Laying-Open No. Hei 11-243997 (1999), for example, there is described a method for manufacturing a biomaterial inspection chip, wherein fine grains (i.e., beads) are prepared, on which DNA probes are fixed, and then a several kinds of beads are collected from among those. An advantage of using the beads lies in the probe chips can be made, but without fluctuation of probe density for each bead, since there can be applied a probe fixing method of using chemical reactions in a solution, and therefore an inspection chip can be make up through collecting them.

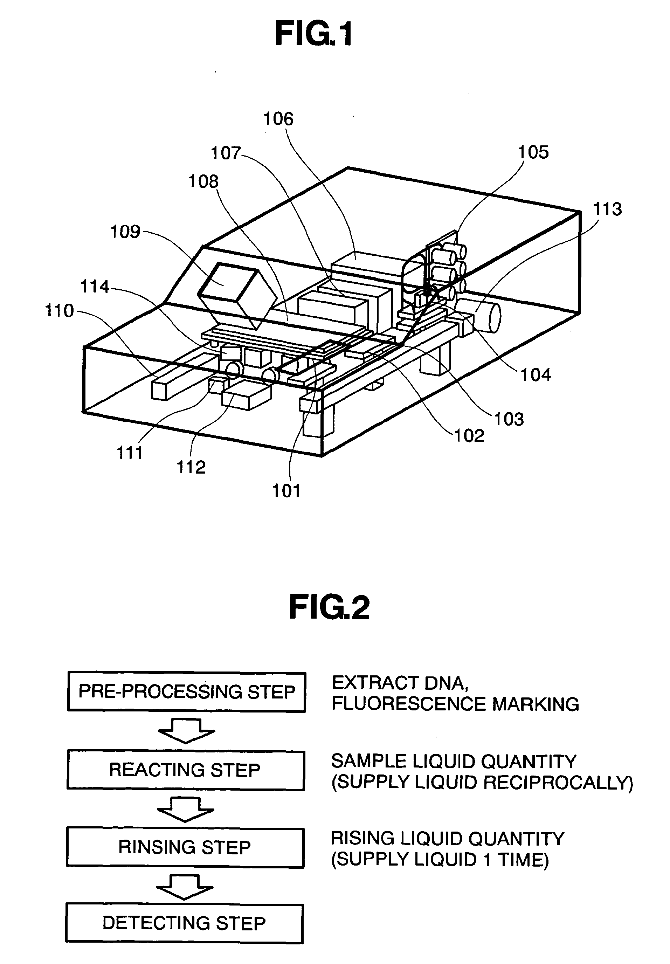

The biomaterial inspection chip system for DNA, etc. , which is made up with the beads, on the surface of which are fixed the probes, however, it has several problems from a viewpoint of designing. By the way of an example, such as, a DNA inspection process of using a DNA inspection chip array system therein comprises the following four (4) steps: "Pre-Processing Step", "Reacting Step", "Rinsing or Washing Step" and "Detecting Step", as shown in Fig. 2. As examples for the respective steps, in particular, within the pre-processing step, DNA is extracted and a fluorescent marking is tagged thereto. In the reacting step, a sample is injected into, and then the DNA sample liquid is moved, reciprocally, through a syringe pump, thereby promoting the reaction. In the rinsing or washing step, a rinsing or washing liquid is guided to flow into a reaction portion, so as to wash out the beads and a reaction flow pass. In the detecting step, detection is made on the fluorescent markings, which are captured on the beads.

In this manner, various reagents and also the steps are necessary when making an inspection upon the DNA sample. Further, the rinsing or washing step must be executed by a several of times, but the number of times depends on the DNA sample liquid to be examined. For this reason, it is necessary to change the rinsing liquid or a device for each of the DNA samples, and therefore there is a problem of increasing the manufacturing cost thereof. Also, since the rinsing liquids are provided within an inside of the inspection apparatus, a user must supply the rinsing liquids; therefore, there is a problem of being inferior in usability (i.e., not user-friendly). Moreover, by taking the entire of such biomaterial inspection chip system into the consideration, if the rinsing liquids held therein, then the apparatus comes to be large in the sizes thereof.

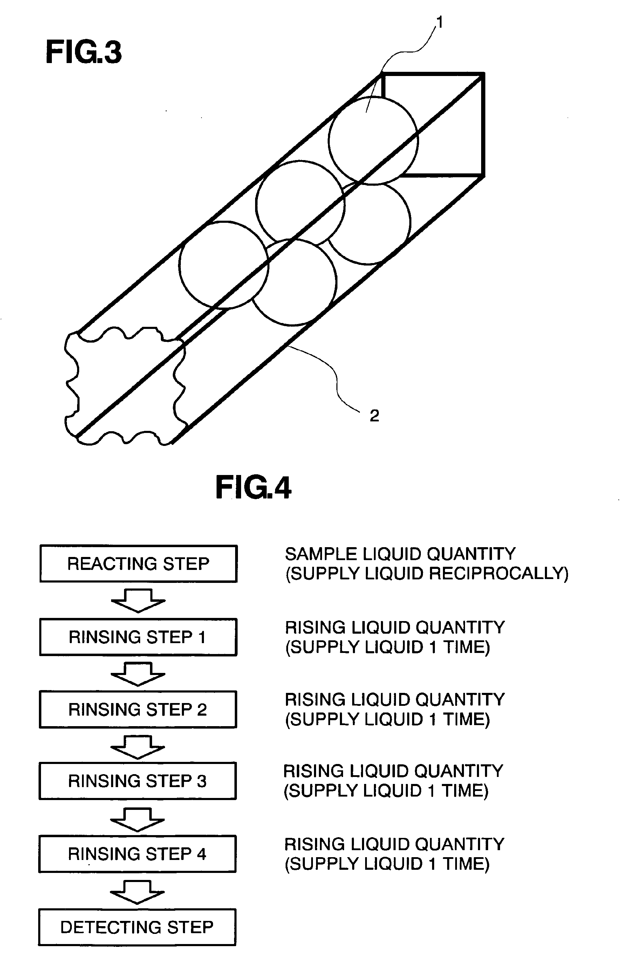

Also, as other problem from the designing viewpoint, there is an aspect of shortening of the reaction time. The biomaterial inspection chip of using the beads therein has a feature that the reaction time is short comparing to that of a plate-type chip, which is mainly used up to now. This is achieved, as is shown in Fig. 3; i.e., a side of a rectangular reaction flow pass or a diameter of a circular reaction flow pass, which holds the beads within the chip, is made larger than a diameter of the beads, so that the beads can be disposed or arranged in a zigzag manner; thereby, causing a disturbance in the flow, so as to accelerate or promote an amount of reaction. However, for applying such the bead-chip array apparatus into the inspection apparatus, there is a demand of further increasing the efficiency of reaction, so as to shorten a measuring time.

## BRIEF SUMMARY OF THE INVENTION

According to the present invention, an object thereof is to reduce the manufacturing cost of an apparatus, as well as, improve the usability for a user, through unifying a rinsing liquid and a biomaterial inspection chip into one body. Other object, according to the present invention, is to shorten the measuring time thereof, with provision of the configuration of a flow pass for increasing the reaction efficiency.

For accomplishing the objects mentioned above, according to the present invention, there is provided a biomaterial inspection chip system, which applies the following means therein.

First, for increasing the usability for a user, or for lowering a cost of an inspection apparatus, a pre-process flow pass and/or a rinsing flow pass are/is unified into an inspection chip, together with a reactor flow pass. Also, for preventing the inspection chip from becoming large uselessly, two (2) or one (1) of a pre-process flow pass and a rinsing liquid reservation flow pass are/is utilized to be a waste liquid flow pass for each of reagents. Further, for conducting the rinsing by plural numbers thereof, effectively, carrying ports for the respective rinsing liquid flow passes are provided at a constant distance therebeween.

Second, for promoting reaction on the beads, not a rectangular flow pass, but there is applied the flow pass having the following configuration, in particular, to a reactor flow pass in which the beads are received therein; i.e., the flow pass configuration of attaching a turbulence generator in the vicinity of the beads, or the flow pass configuration of being provided with a guide for stopping flow separation behind the beads, thereby enabling to increase the reacting weight.

For manufacturing such the biomaterial inspection chip having such the aspects mentioned above, it is necessary to improve the degree of freedom for designing the configurations of the pre-process flow pass, the reactor flow pass and the rinsing liquid flow pass. Then, for building up the configurations of those flow passes on one (1) pieces of the biomaterial inspection chip, any one of those configurations of those flow passes is formed from a PDMS (Polydimethylsiloxane: $(C_2H_6SiO)_n$).

## BRIEF DESCRIPTION OF THE SEVERAL VIEWS OF THE DRAWING

Those and other objects, features and advantages of the present invention will become more readily apparent from the following detailed description when taken in conjunction with the accompanying drawings wherein:

Fig. 1 is a perspective view of an inspection apparatus for a typical beads array system;

Fig. 2 is a flow of steps of DNA inspection;

Fig. 3 is a perspective view for showing beads disposed within a rectangular flow pass;

Fig. 4 is a flow of other steps of DNA inspection;

Figs. 5 to 15 are views in relation to an embodiment of a biomaterial inspection system,according to the present invention, wherein:

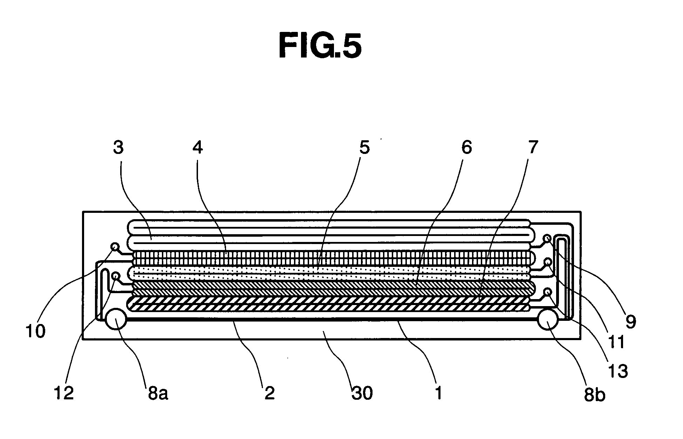

Fig. 5 is an upper view of a chip having a rinsing liquid held therein;

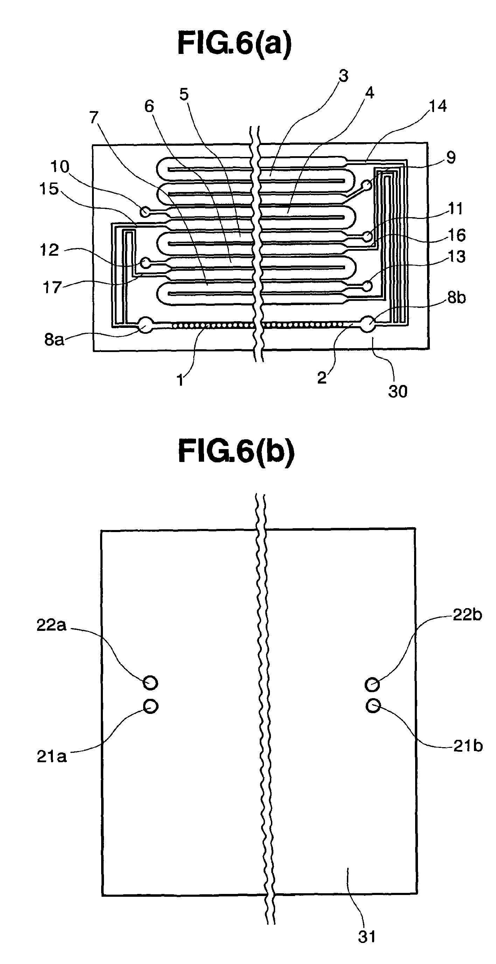

Figs. 6(a) and 6(b) are upper views of the chip having a rinsing liquid held therein and a chip cover;

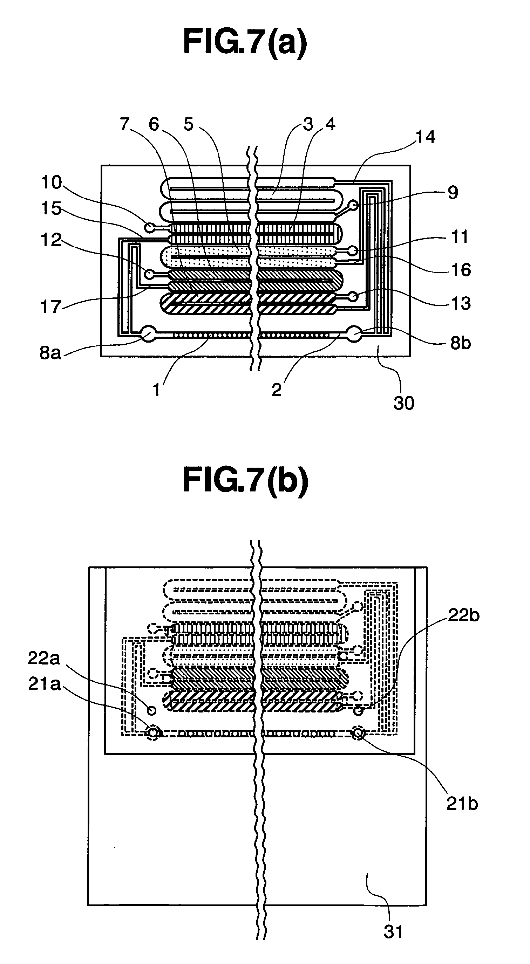

Figs. 7(a) and 7(b) are upper views for showing relative positions of the chip and the chip cover in a reacting step;

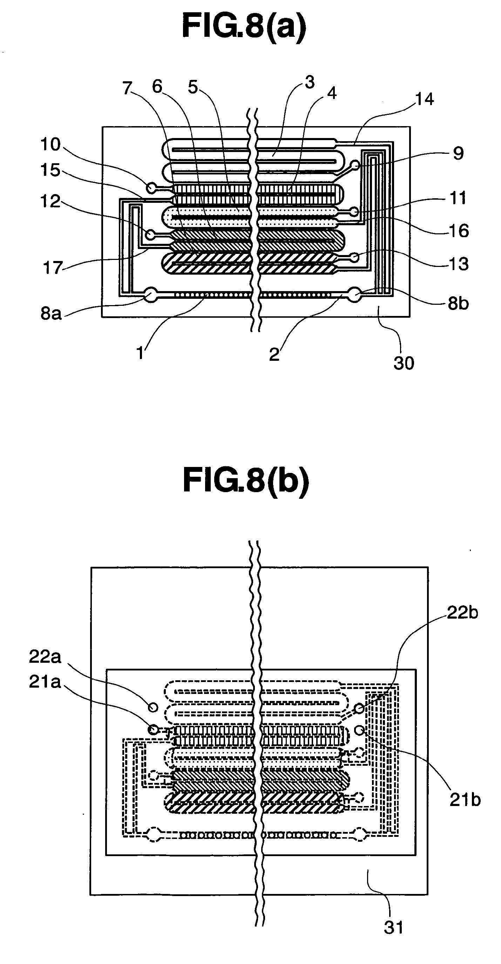

Figs. 8(a) and 8(b) are upper views for showing relative positions of the chip and the chip cover in a rinsing step 1;

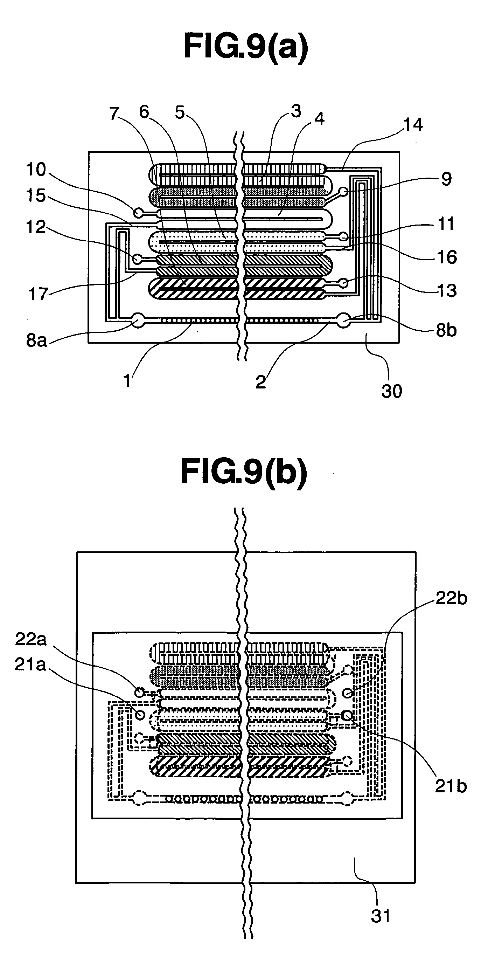

Figs. 9(a) and 9(b) are upper views for showing relative positions of the chip and the chip cover in a rinsing step 2;

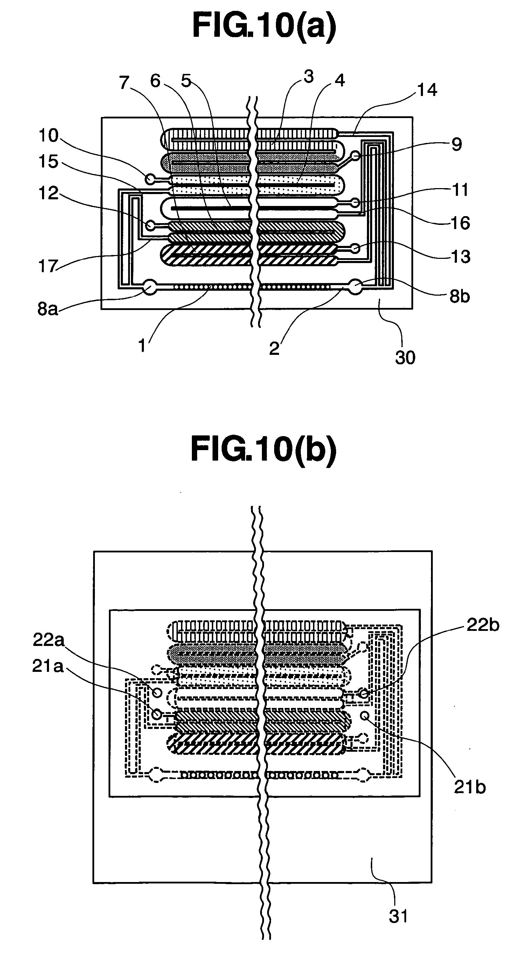

Figs. 10(a) and 10(b) are upper views for showing relative positions of the chip and the chip cover in a rinsing step 3;

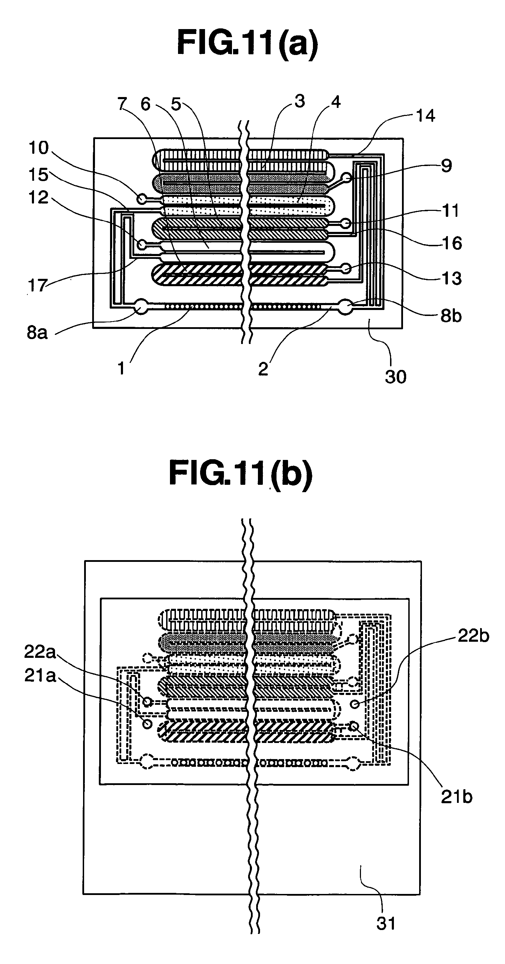

Figs. 11(a) and 11 (b) are upper views for showing relative positions of the chip and the chip cover in a rinsing step 4;

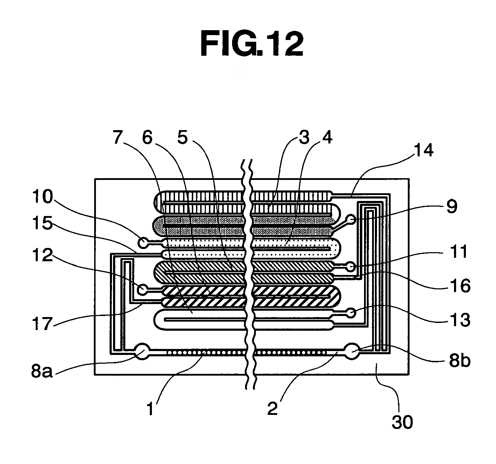

Fig. 12 is an upper view for showing the condition of the chip before a detecting step;

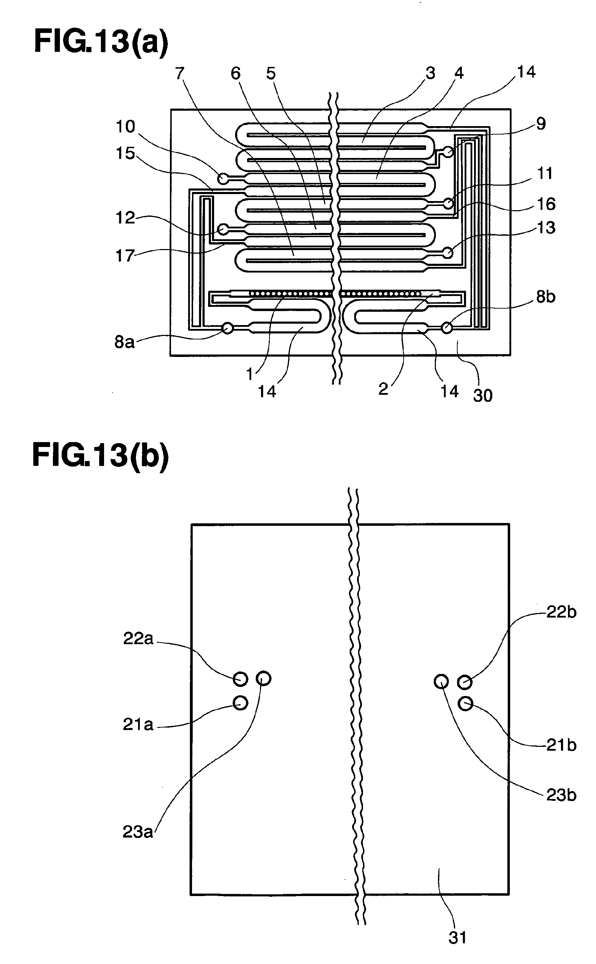

Figs. 13(a) and 13(b) are upper views of the chip having the rinsing liquid held therein and the chip cover;

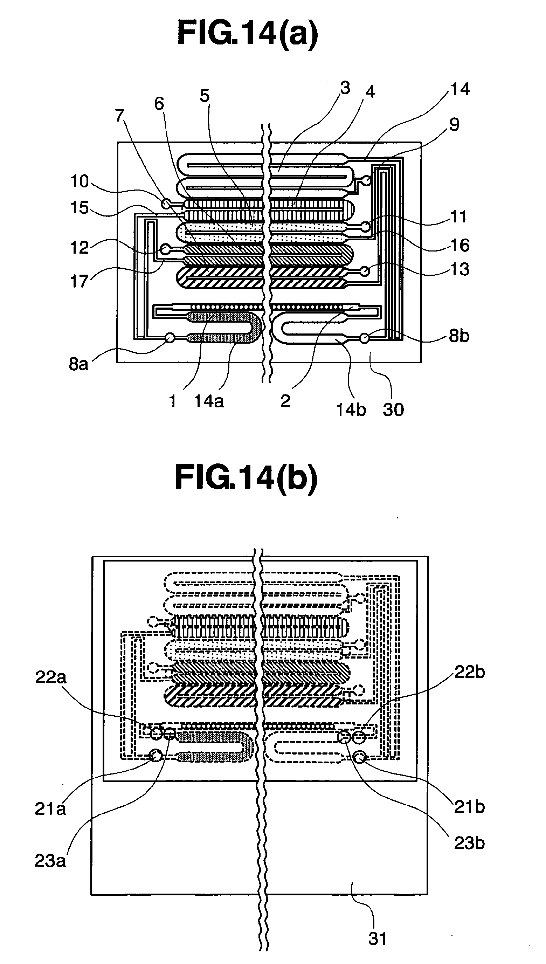

Figs. 14(a) and 14(b) are upper views for showing relative positions of the chip and the chip cover in the reacting step; and

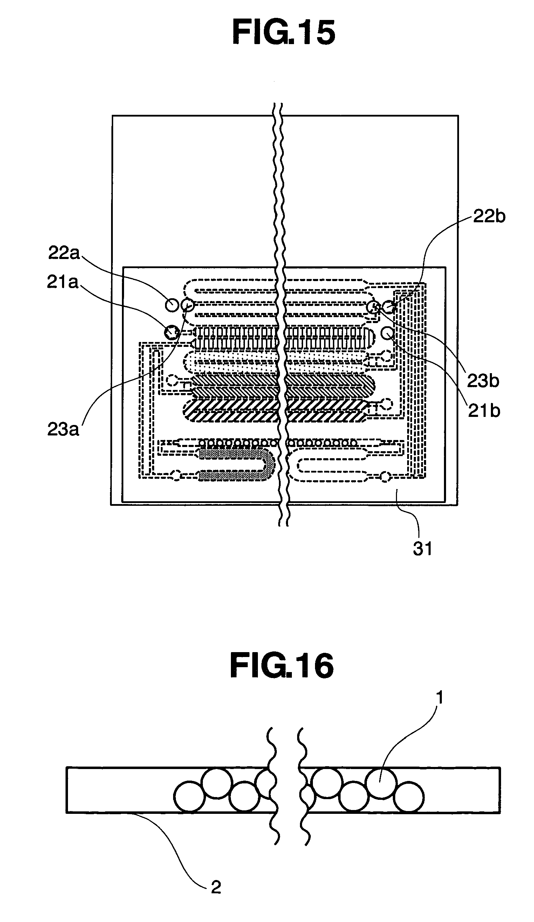

Fig. 15 is an upper view for showing relative positions of the chip and the chip cover in a rinsing step 1; and further,

Fig. 16 is a view for showing the conventional art wherein beads are positioned within the rectangular flow pass;

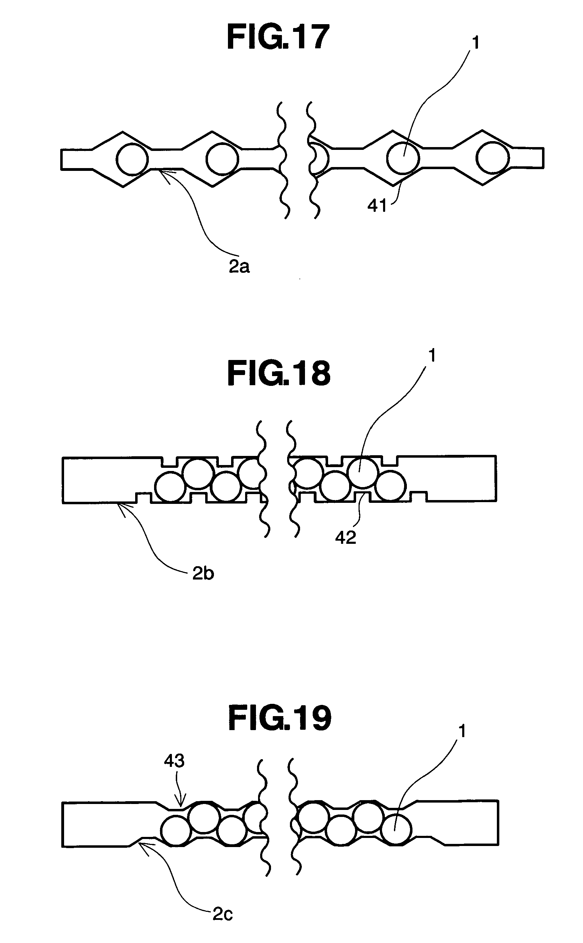

Figs. 17 to 20 are upper viwes for showing other embodiments of the flow pass, according to the present invention; and

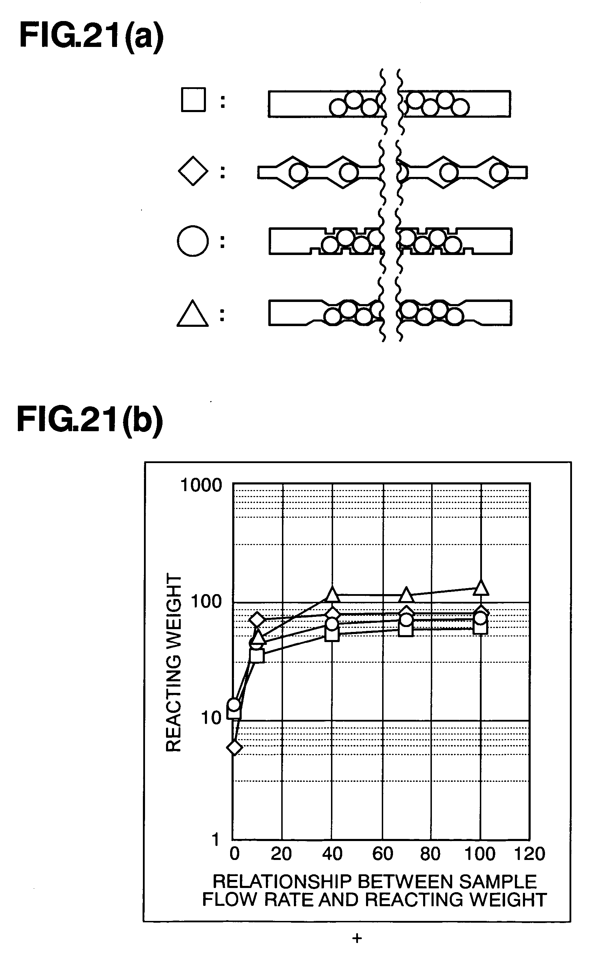

Figs. 21(a) and 21(b) are view for explaining a relationship between sample flow rate and reacting weight, with taking the configuration of the flow pass as parameters thereof.

## DETAILED DESCRIPTION OF THE INVENTION

Hereinafter, embodiments according to the present invention will be fully explained by referring to the attached drawings.

Thought thee present invention can be applied to a probe, which is used for detection and/or diagnosis of materials relating to an organism, such as, peptide, protein, DNA, RNA, etc. , however, explanation will be made only about a case where it is used for detecting DNA, for example, hereinafter.

Explanation will be made about an embodiment of the biomaterial inspection chip system of using beads therein, according to the present invention, by referring to Fig. 1. This Fig. 1 is a perspective view of the biomaterial inspection chip system of using beads therein. The biomaterial inspection chip system, as shown in Fig. 1, comprises a chip take-in window 101 for inserting an inspection chip 30 therethrough, a reaction stage 104, a pump 113 and a valve 105 for transferring a DNA sample liquid and/or a rinsing or washing liquid to a beads array, a laser light source 110, a condensing lens, an optic stage 102 for measuring an intensity of fluorescence due to hybridization, a mirror 114 for changing the direction of a laser beam, and further other many parts thereof.

An example of a measuring process is as follows. Thus, being taken into through the chip take-in window 101, the inspection chip 30 is transferred up to the reaction stage 104 with using a moving stage 103. It is pressurized by means of the syringe pump 113, and the flow pass thereof is exchanged through a valve 105. The DNA sample liquid is reciprocally supplied to beads , onto which DNA probes are fixed, within a reactor flow pass, thereby achieving the hybridization. After completing the hybridization, then the rinsing or washing liquids of plural kinds are supplied to the reactor flow pass, for removing un-reacted DNA therefrom. For the purpose of supplying those liquids, also the syringe pump 113 and the valve 105 are used.

After completion of rinsing or washing, the inspection chip 30 is moved up to the optic stage 102 with using the moving stage 103. Thereafter, the laser beam 110 is irradiated thereupon, so as to measure the hybridized intensity of fluorescence. A motor driver 107 and a controller board 108 are used for the purpose of operating the moving stage 103 and the valve 105. A power source 106 supplies electricity to each kind of the parts. An information access panel 109 is used for inputting a measurement condition and outputting a measurement result. When a sample DNA tagged with the fluorescent marking is caught on a bead where the laser beam is irradiated upon, the fluorescence generated from the sample DNA is selected through a wavelength thereof by means of a filter, and thereafter is detected by means of a photo detector. The laser beams is irradiated along with the flow pass with using an excitation laser, and a picture obtained through using the fluorescence detector is displayed on the information access panel 109.

Hereinafter, detailed explanation will be made about a portion of constituent parts of the biomaterial inspection chip system of using beads therein. In the explanation given below, the bead is explained to be spherical in the shape thereof, however it may be rectangular or others in the shape thereof. The bead having a size from 1-300 $\mu$m can be used therein, however in the below, the explanation will be made about an example of using a bead of 100 $\mu$m, mainly. Further, normally, the bead is made of a material, such as glass or plastic, however also a bead made of metal may be applied in the place thereof. Herein, the bead made of glass is applied.

As an inspection chip for holding beads, there are two types of holding them in a one-dimensional manner and holding them in a two-dimensional manner, however explanation will be given on that of holding them in the one-dimensional manner, mainly, for the purpose of convenience of the explanation thereof.

As being such the inspection chip of holding the beads, the flow pass may be formed with a circular tube pass, such as, a capillary, for example, or it may be formed of a kind of silicon resin, such as, PDMS (Polydimethylsiloxane: $(C_2H_6SiO)_n$), on a glass substrate. The flow pass formed from a material, such as PDMS, has the following three (3) advantages. First of all, if a mold is made out once, then the flow pass can be formed from the PDMS, very easily and cheaply. Second, differing from the capillary, if the mold thereof can be obtained, the flow pass can be formed with having various configurations thereof; therefore, there is little restriction upon the configuration thereof. Third, since the self-luminescence thereof is very small, therefore the flow pass is superior in the optical characteristics, in particular, upon measuring the fluorescence intensity. Thus, with application of PDMS, the flow pass configuration to hold the beads, on which the hybridization is promoted, can be produced, easily and cheaply, but without increasing the manufacturing cost thereof.

As will be shown in Fig. 5, which will be mentioned later, with provision of the rinsing liquids held within the inspection chip 30, there is no necessity of a space for holding the rinsing liquids within the inspection apparatus; therefore, the inspection apparatus can be made small in sizes thereof. Also, with provision of the rinsing liquids held within the inspection chip 30, it is not necessary for a user to supplement the rinsing liquids to the apparatus, thereby increasing the usability thereof.

The laser beam from the laser light source is condensed through the lens, to be irradiated upon the probe. The fluorescence generated from the sample DNA combined with a fluorescent pigment, which is captured on the bead at the portion where the laser beam is irradiated upon, is selected by wavelengths thereof through a filter, to be detected by means of a photo detector, such as, a CCD camera or a photo multiplexer, etc. The fluorescence intensity detected is indicative of the position of the bead aligned within the flow pass; i.e. , the presence of a fragment of the sample DNA, which joints a complementary chain combination corresponding to a kind of the probe. For measuring the bead of itself, a light receiving element is applied, such as, an APD (i.e., Avalanche Photo Diode), for example. In case of applying such APD, it is enough to let the bead to have any kind of fluorescence by itself. Or, in the place of conducting such the wavelength selection, it is possible to detect the position of the bead with mounting a CCD camera thereon. Or, it is also possible to apply a light receiving element having a sensitivity higher than that of the APD, such as, a PMT (i.e., Photo Multiplexer). For wavelength dividing, it is enough to apply a dichroic mirror, for example.

<Embodiment 1>

An inspection chip 30 is manufactured based on an assumption that rinsing orwashingmust be carried out by four (4) times therein, as is shown in Fig. 4. therewith. Fig. 5 shows the chip 30 holding four (4) kinds of rinsing liquids therein. This chip 30 is for use of the DNA examination or test, and it comprises a reactor flow pass 2, within which beads are provided, four (4) flow passes 4, 5, 6 and 7 for storing four (4) kinds of rinsing liquids therein and a waste fluid flow pass 3 for receiving a part of the used rinsing liquid(s) and the DNA sample liquid after reaction, ports 8a and 8b for carrying the DNA sample liquid, ports 10, 11, 12 and 13 for carrying the rinsing liquids, and a port 9 for carrying the waste liquid. However, since the rinsing liquid differs from depending upon an object of inspection, the number of the flow passes for receiving the rinsing liquids therein is made changeable depending upon the object of inspection. Also, it is possible to add a flow pass for conducting a pre-process.

Fig. 6(a) shows an enlarged DNA inspection chip 30 and a chip cover 31 necessary for sending the test liquid and the rinsing liquids into each of the flow passes. Five (5) pieces of the ports are provided aligning at an equal distance therebetween; i.e., the carrying ports 8a and 8b to the reactor flow passes, the port 10 for use of a first rinsing liquid, the port 11 use of a second rinsing liquid, the port 12 for use of a third rinsing liquid, the port 13 for use of a fourth rinsing liquid, and the carrying port 9 for the wasted liquid of sample. Into the fluid flow pass 3 will be received, not only the wasted liquid of sample after the completion of reaction, but also the first rinsing liquid after rinsing or washing operation thereof. And also, the second rinsing liquid will be received into the flow pass 4 for the first rinsing liquid, after rinsing operation thereof. In the similar manner, the third rising liquid will be received into the second flow pass 5 for the second rinsing liquid, after the rinsing operation thereof , and the fourth rinsing liquid into the flow pass 6 for the third rinsing liquid after the rinsing operation thereof. With such the present chip, the wasted liquid of sample and four (4) kinds of rinsing liquids will be received within an inside of the chip, but without being disposed into an outside thereof. With this, the wasted liquid of sample can be disposed, completely and safely.

Fig. 6(b) shows the chip cover 31. On this chip cover 31 are formed four (4) pieces of openings 21a, 21b, 22a and 22b. The lower two (2) pieces of openings 21a and 21b are pressurizing openings for controlling the sending of the sample liquid and also the rinsing liquids, while the upper two (2) pieces of openings 22a and 22b are air openings for releasing the pressure into atmospheric pressure.

Detailed steps when using the present chip will be shown by referring to Figs. 7 (a) to 12. Fig. 7(a) shows the chip 30 before executing the hybridization, while Fig. 7(b) a relative positions between the chip 30 and the chip cover 31 when reaction occurs therein. In this Fig. 7(b), the chip 30 is indicated with chained lines.

The chip 30 or the chip cover 31 is moved, so that the carrying ports 8a and 8b leading to the reactor flow pass 2 come to be coincident with the pressurizing openings 21a and 21b on the chip cover in the positions thereof. The sample liquid is transmitted into the reactor flow pass 2 disposing the beads 1 therein, through alternatively pressurizing thereupon, while exchanging the valve 105 by the function of the syringe pump 113 shown in Fig. 1.

Fig. 8(a) shows the chip 30 before conducting the first rinsing. Fig. 8(b) shows the relative positions between the chip 30 and the chip cover 31 before conducting the first rinsing. The chip 30 is indicated with chained lines therein. The chip 30 or the chip cover 31 is moved, so that the carrying port 10 for the first rinsing liquid comes to be coincident with the pressurizing opening 21a on the chip cover in the positions thereof. In this instance, since the ports are provided at the equal distance therebeween, the carrying port 9 of the waste liquid flow pass 3 comes to be coincident with the air opening 22b on the chip cover 31 in the position thereof. Through pressurization by the function of the syringe pump 113, the sample liquid remaining within the reactor flow pass 2 is sent out into the waste liquid flow pass 3. With doing this, the first rinsing liquid is transmitted into the reactor flow pass 2, thereby executing rinsing operation therein. Thereafter, that liquid is also sent out into the waste liquid flow pass 3.

Fig. 9(a) shows the chip 30 before conducting the second rinsing. Fig. 9(b) shows the relative positions between the chip 30 and the chip cover 31 before conducting the second rinsing. The chip 30 is indicated with chained lines therein. The chip 30 or the chip cover 31 is moved, so that the carrying port 11 of the flow pass 5 for the second rinsing liquid comes to be coincident with the pressurizing opening 21b on the chip cover 31 in the positions thereof. Since the ports are provided at the equal distance therebeween, the carrying port 10 for the first rinsing liquid comes to be coincident with the air opening 22a on the chip cover 31 in the position thereof. Through pressurization by the function of the syringe pump 113, the second rinsing liquid is transferred into the reactor flow pass 2, thereby executing the rinsing therein. Thereafter, that liquid is sent out into the empty or vacant flow pass 4 for the first rinsing liquid.

Fig. 10(a) shows the chip 30 before conducting the third rinsing. Fig. 10(b) shows the relative positions between the chip 30 and the chip cover 31 before conducting the third rinsing. The chip 30 is indicated with chained lines therein. The chip 30 or the chip cover 31 is moved, so that the carrying port 12 for the third rinsing liquid comes to be coincident with the pressurizing opening 21a on the chip cover 31 in the positions thereof. Since the ports are provided at the equal distance, the carrying port 11 for the second rinsing liquid comes to be coincident with the air opening 22b on the chip cover 31 in the position thereof. Through pressurization by the function of the syringe pump 113, the third rinsing liquid is transferred into the reactor flow pass 2, thereby executing the rinsing therein. Thereafter, that liquid is sent out into the empty or vacant flow pass 5 for the second rinsing liquid.

Fig. 11(a) shows the chip 30 before conducting the fourth rinsing. Fig. 10(b) shows the relative positions between the chip 30 and the chip cover 31 before conducting the fourth rinsing. The chip 30 is indicated with chained lines. The chip 30 or the chip cover 31 is moved, so that the carrying port 13 for the fourth rinsing liquid comes to be coincident with the pressurizing opening 21b on the chip cover 31 in the positions thereof. Since the ports are provided at the equal distance, the carrying port 12 for the third rinsing liquid comes to be coincident with the air opening 22a on the chip cover 31 in the position thereof. Through pressurization by the function of the syringe pump 113, the fourth rinsing liquid is transferred into the reactor flow pass 2, thereby executing the rinsing therein. Thereafter, that liquid is sent out into the empty or vacant flow pass 6 for the third rinsing liquid.

Fig. 12 shows the chip 30 after completion of the fourth rinsing operation. With the structure of the present inspection chip, the wasted liquid of sample and the four (4) kinds of the rinsing liquids are received within an inside of the chip, but without being disposed into an outside thereof. With this, the wasted liquid of sample can be disposed, completely and safely.

<Embodiment 2>

Figs. 13(a) and 13(b) show other embodiment of an inspection chip according to the present invention. On the present embodiment, it is also assumed that that rinsing be carried out by four (4) times therein, as is in the first embodiment mentioned above. With the present embodiment, however, the DNA sample and the rinsing liquids held within the inspection chip 30 are measured in the liquid quantity thereof, by means of a liquid surface sensor, and wherein an amount of liquid to be transmitted is controlled with using a liquid surface values measured.

Fig. 13(a) shows an enlarged DNA inspection chip 30 and a chip cover 31 necessary for sending the test liquid and the rinsing liquids into each of the flow passes. On this chip 30, there are also formed the reactor flow pass 2, within which the beads are aligned, flow passes 4-7 for receiving the four (4) kinds of rinsing liquids therein, the flowpass 14 for holding the DNA sample therein, and the waste liquid flow pass 3 for receiving the DNA sample liquid wasted. Five (5) pieces of the ports are provided aligning at an equal distance therebetween; i.e. , the carrying ports 8a and 8b to the reactor flow passes, the port 10 for use of the first rinsing liquid, the port 11 use of the second rinsing liquid, the port 12 for use of the third rinsing liquid, the port 13 for use of the fourth rinsing liquid, and the carrying port 9 for the wasted liquid of sample. Into the fluid flow pass 3 will be received, not only the was tedliquid of sample after the completion of reaction, but also the first rinsing liquid after rinsing operation thereof. Into the flow pass 4 for the first rinsing liquid, the second rinsing liquid will be received after the rinsing operation thereof. Into the second flow pass 5 for the second rinsing liquid, the third rising liquid will be received after the rinsing operation thereof, and into the flow pass 6 for the third rinsing liquid, the fourth rinsing liquid after the rinsing operation thereof. With such the present chip, the wasted liquid of sample and the four (4) kinds of rinsing liquids can be received within an inside of the chip, but without being disposed into an outside thereof. With this, the wasted liquid of sample can be disposed, completely and safely.

Fig. 13(b) shows a top view of the chip cover 31. On the chip cover 31 are formed six (6) pieces of openings 21a-23b. The two (2) pieces of openings 21a and 21b are pressurizing openings for controlling the sending of the sample liquid and also the rinsing liquids, other two (2) pieces of openings 22a and 22b are air openings for releasing the pressure into atmospheric pressure, and further other two (2) pieces of openings 23a and 23b are openings for use in sensing the liquid quantities of the DNA sample liquid and the rising liquids with using a liquid surface sensor.

Fig. 14(a) shows a condition where the DNA sample liquid is transferred into the chip 30 holding the rinsing liquids therein. Fig. 14(b) shows a positional relationship between the chip and the cover in a reacting step of the hybridization. The chip 30 is indicated with chained lines. The chip 30 or the chip cover 31 is moved, so that the carrying ports 8a and 8b leading to the reactor flow pass 2 come to be coincident with the pressurizing openings 21a and 21b on the chip cover 31 in the positions thereof. Then, the sample liquid is transmitted into the reactor flow pass 2 disposing the beads 1 therein, through alternatively pressurizing thereupon, while exchanging the valve 105 by the function of the syringe pump 113. In this instance, measurement is made upon the liquid surface of the DNA sample through the sensing openings 23a and 23b, thereby achieving the quantity measurement of liquids held within the DNA sample reservation flow passes 14a and 14b. With this, it is possible to control the syringe pump, accurately or correctly.

Fig. 15 shows the relative positions between the chip 30 and the chip cover 31 before conducting the first rinsing, by an upper view thereof. The chip 30 is indicated with chained lines. The chip 30 or the chip cover 31 is moved, so that the carrying port 10 for the first rinsing liquid comes to be coincident with the pressurizing opening 21a on the chip cover 31 in the positions thereof. Since the ports are provided at the equal distance therebeween, the carrying port 9 of the waste liquid flow pass 3 comes to be coincident with the air opening 22b on the chip cover 31 in the position thereof. Also, at the same time, the sensing opening 23b comes to be coincident with an exit of the waste liquid flow pass 3. Through pressurization by the function of the syringe pump 113, the sample liquid remaining within the reactor flow pass 2 is sent out into the waste liquid flow pass 3. With doing this, the first rinsing liquid is transmitted into the reactor flow pass 2, thereby executing rinsing operation therein. Thereafter, that liquid is also sent out into the waste liquid flow pass 3. The sensing is made upon a boundary surface of the liquid surface through the sensing opening 23b, thereby controlling the syringe pump 113. In relation to the second to the fourth rinsing steps, the same operation as was mentioned above will be made.

By using such the chip, there is no chance that the DNA sample liquid and/or the rinsing liquids are transferred into a side of the inspection apparatus. With this, the DNA samples will not be mixed with, even executing the inspection by many times, thereby enabling an effective inspection.

[Surface Configuration of the Flow Pass]

Since the chip 30 is made of the PDMS, it is possible to obtain various kinds of surface configurations for the flow pass. Changing the reactor flow pass from the surface configuration of building up with a plane into the surface configuration, which will be mentioned below, enables to increase the efficiency of reaction, thereby shortening the reaction time. The fundamental way of thinking to increase the reacting weight is as below. Thus, the reaction upon the beads surface is in relation to the diffusion capacity of the sample. The reacting weight of the sample on the bead surface can be expressed by the following equation:

$$\text{(Reacting weight upon the beads surface)} \propto \Sigma((\text{Local diffusion capacity}) \times (\text{Minute area}))... (1)$$

From the equation (1) mentioned above, it is enough to increase the local diffusion capacity or the minute area for increasing the reacting weight upon the beads surface. For the purpose of increasing the diffusion capacity, it is enough to disturb the flow. Also, for increasing the minute area, it is enough to increase the area contributing to the reaction. Figs. 17 to 20 show several embodiments of the surface configuration of the flow pass, so as to increase the reacting weight upon the beads surface, through the upper views thereof. Further, for the purpose of comparison, the surface configuration of the conventional flow pass is shown in Fig. 16. Thus, within the surface configuration of the flow pass shown in Fig. 16, the probe beads 1 are disposed or aligned in a zigzag manner with respect to the rectangular flow pass.

Within the flow pass surface 2a shown in Fig. 17, a flow separation stop guide 41 is provided behind the beads 1. With the surface configuration of the conventional flow pass 2, a large flow separation is generated in the flow, in particular, behind the beads 1, so that the effective area contributing to the reaction is reduced. On the contrary to that, with the flow pass surface 2a shown in the present embodiments, since the flow separation stop guide 41 is provided behind the beads 1, the flow does not generates the flow separation even behind the beads 1; thus, flowing along with the beads 1. With this, the reacting weight goes up. This expects increasing of the second item in the equation (1).

Fig. 18 shows an example of forming a turbulence generator 42 upon an interior wall surface of the flow pass

## EP 1 616 622 A2

2b, in particular, in the vicinity of the beads 1; thereby promoting the diffusion of flow in the periphery of the beads 1. Due to the promotion of the diffusion of flow, the reacting weight increases. This expects increasing of the first item in the equation (1).

Fig. 19 shows an example of a flow pass surface 2c, in which a gap between the beads 1 is filled up with; i.e., those beads 1 are in contact with each other. On both sides of the flow pass surface 2c are formed narrowed portions 43, in plural pieces thereof, corresponding to the size of beads, but changing the position thereof on both sides of the wall surface. The flow is zigzagged, so that the diffusion of flow can be promoted. Also, since the flow pass configuration fits to the beads 1, the flow runs along with the beads therein; thereby increasing the effective area, substantially, as well as, the reaction weight.

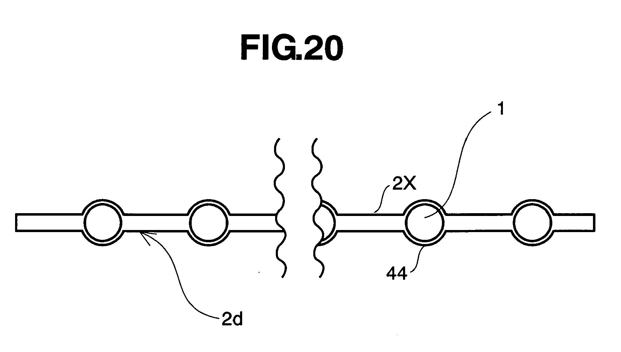

Fig. 20 shows an example of a flow pass surface 2d, on the way of which are formed expanding portions 44, being a little bit larger than the outer configuration of the bead 1, in plural numbers of locations thereof. In this case, but an area "2x" of the flow pass defined between those beads 1 is made narrow, comparing to the size of the beads 1. Because of forming the narrow flow pass surface "2x", flow velocity of the liquid increases; therefore, the liquid having high velocity collides upon the beads 1. With this, the diffusion capacity increases. Since the surface configuration 2 of the flow pass has the configuration fitting to the beads 1, no such flow separation occurs in the flow even behind the beads; therefore, it never reduce the effective area that substantially contributes the reaction. This expects increasing of the first and second items in the equation (1).

Figs. 21(a) and 21(b) show the conventional flow pass 2 formed of a plane and the flow pass surfaces 2a-2c for increasing the reacting weight, and also a results of analysis upon reactions when applying them, by taking the hybridization reaction upon the surface of the beads 1. With applying the flow pass surfaces 2a-2c for increasing the reacting weight, the reacting weight increases, comparing to that obtained with the conventional rectangular flow pass configuration. Comparing the flow pass surface 2c to the conventional flow pass 2 of a plane, the reacting weight increases by 70% with the flow pass surface 2c.

As was fully explained in the above, according to the present invention, with the biomaterial inspection chip system of using beads therein, targeting the biomaterials , such as, DNA and protein, etc., since the pre-process flow pass and/or the rinsing liquid flow passes are provided within a bead chip in one body, it is possible to improve the usability for a user thereof. Also, the inspection apparatus can be made small in the sizes thereof. Further, with provision of the turbulence generator in periphery of the beads, which are disposed within the reactor flow pass, or with provision of the flow separation stop guide behind the beads, the reacting efficiency increases up by 70%, comparing to the conventional flow pass made of a plane; thereby enabling to shorten the reaction time, i.e. , reduction of the testing time thereof.

The preferred embodiments descried herein are therefore illustrative and not restrictive, the scope of the invention being indicated by the appended claims and all variations which come within the meaning of the claims are intended to be embraced therein.

## Claims

1.    A biomaterial inspection chip (30), comprising:

    plural numbers of beads (1), each fixing a probe, which is able to combine with a biomaterial; and
    a reactor flow pass (2) for receiving said beads (1) therein, within an inside thereof.

2.    The biomaterial inspection chip (30) as described in claim 1, further comprising:

    a pre-processing step flow pass.

3.    The biomaterial inspection chip, as described in claim 2, wherein said pre-processing step flow pass after using thereof is utilized to be a waste liquid flow pass (3).

4.    A biomaterial inspection chip (30), as described in claim 1, further comprising:

    a rinsing liquid flow pass (4,5,6 and 7).

5.    The biomaterial inspection chip (30), as described in claim 4, wherein said rinsing liquid flow pass (4,5,6,7) after using thereof is utilized to be a waste liquid flow pass (3).

6.    The biomaterial inspection chip, as described in claims 1 or 4, further comprising:

90

a waste liquid flow pass (3).

7. The biomaterial inspection chip (30), as described in claim 6, wherein at least any one of said pre-processing step flow pass, said rinsing liquid flow pass (4,5,6,7) and said waste liquid flow pass (3) is made of any one of a PDMS (Polydimethylsiloxane:$(C_2H_6SiO)n$), a glass and an acryl resin.

8. The biomaterial inspection chip (30), as described in claim 6, wherein carrying ports (9) are provided for said pre-processing step flow pass, said rinsing liquid flow pass (4,5, 6,7) and said waste liquid flow pass (3), respectively, and they are located at a substantially constant distance therebetween.

9. A biomaterial inspection chip system using a biomaterial inspection chip (30) according to claim 2, 4 or 6 therein, comprising:

    a sensing means for sensing a condition of transmitting a sample liquid and/or a rinsing liquid upon a boundary surface between a liquid and a gas; and
    a controller means (21a;21b) for controlling transmission with using an output of said sensing means.

10. A reactor blow pass made of a PDM, to be used within a biomaterial inspection chip, comprising:

    plural numbers of beads (1), each fixing a probe, which is able to combine with a biomaterial; and
    a guide being disposed behind said beads (1), for stopping exfoliation.

11. A reactor blow pass made of a PDM, to be used within a biomaterial inspection chip, according to any of the preceding claims, comprising:

    a turbulence generator (41) formed on a surface within a flow pass in vicinity of said beads.

# FIG.1

# FIG.2

| PRE-PROCESSING STEP | EXTRACT DNA, FLUORESCENCE MARKING |
| REACTING STEP | SAMPLE LIQUID QUANTITY (SUPPLY LIQUID RECIPROCALLY) |
| RINSING STEP | RISING LIQUID QUANTITY (SUPPLY LIQUID 1 TIME) |
| DETECTING STEP | |

# FIG.3

# FIG.4

| | |
|---|---|
| REACTING STEP | SAMPLE LIQUID QUANTITY (SUPPLY LIQUID RECIPROCALLY) |
| ⇩ | |
| RINSING STEP 1 | RISING LIQUID QUANTITY (SUPPLY LIQUID 1 TIME) |
| ⇩ | |
| RINSING STEP 2 | RISING LIQUID QUANTITY (SUPPLY LIQUID 1 TIME) |
| ⇩ | |
| RINSING STEP 3 | RISING LIQUID QUANTITY (SUPPLY LIQUID 1 TIME) |
| ⇩ | |
| RINSING STEP 4 | RISING LIQUID QUANTITY (SUPPLY LIQUID 1 TIME) |
| ⇩ | |
| DETECTING STEP | |

# FIG.5

# FIG.6(a)

# FIG.6(b)

# FIG.7(a)

# FIG.7(b)

# FIG.8(a)

# FIG.8(b)

# FIG.9(a)

# FIG.9(b)

# FIG.10(a)

# FIG.10(b)

# FIG.11(a)

# FIG.11(b)

# FIG.12

**FIG.13(a)**

**FIG.13(b)**

# FIG.14(a)

# FIG.14(b)

# FIG.15

# FIG.16

# FIG.17

2a

41

1

# FIG.18

1

42

2b

# FIG.19

43

2c

1

# FIG.20

# FIG.21(a)

# FIG.21(b)

RELATIONSHIP BETWEEN SAMPLE
FLOW RATE AND REACTING WEIGHT

+